# EUROPÄISCHE PATENTSCHRIFT

(11) **EP 4 508 008 B1**
(45) Veröffentlichungstag und Bekanntmachung des Hinweises auf die Patenterteilung: **28.01.2026**
(21) Anmeldenummer: 23717068.3
(22) Anmeldetag: 30.03.2023
(51) Int. Cl.: C01B 32/215

(54) **VERFAHREN ZUR HERSTELLUNG VON GEREINIGTEM GRAPHIT**
METHOD FOR PRODUCING PURIFIED GRAPHITE
PROCÉDÉ DE PRODUCTION DE GRAPHITE PURIFIÉ

(30) Priorität: 12.04.2022 DE 102022108846
(43) Veröffentlichungstag der Anmeldung: 19.02.2025
(73) Patentinhaber: Dorfner Anzaplan GmbH, 92242 Hirschau (DE)
(72) Erfinder: FELBINGER, Thomas, 93173 Wenzenbach (DE); WEIDLER, Tobias, 92224 Amberg (DE); RISCHE, Daniel, 92272 Freudenberg-Aschach (DE); GRAF, Christian, 92224 Amberg (DE)
(74) Vertreter: Dr. Gassner & Partner mbB
(86) Internationale Anmeldenummer: PCT/EP2023/058335
(87) Internationale Veröffentlichungsnummer: WO 2023/198472

(56) Entgegenhaltungen:
- WO-A1-2021/232090
- AU-B2- 633 608
- US-A- 2 787 528
- LU XIN J ET AL: "Preparation of high-purity and low-sulphur graphite from Woxna fine graphite concentrate by alkali roasting", MINERALS ENGINEERING, vol. 15, no. 10, 1 October 2002 (2002-10-01), AMSTERDAM, NL, pages 755 - 757, XP055873583, ISSN: 0892-6875, DOI: 10.1016/S0892-6875(02)00172-3

## Beschreibung

Die Erfindung betrifft ein Verfahren zur Herstellung von gereinigtem Graphit.

Aus der AU 2021261902 B2 ist bereits ein Verfahren zur Herstellung von gereinigtem Graphit bekannt. Dabei wird ein Gemisch aus einem Graphit-Ausgangsmaterial und einer 50%igen NaOH-Lösung hergestellt. Das Gemisch wird in einem Drehrohrofen auf eine Temperatur von 450° C bis 550° C erhitzt. Im Anschluss daran wird das trockene Gemisch mit Wasser versetzt, filtriert und gewaschen. Es ergibt sich ein gewaschener Rückstand, welcher mittels mehrerer saurer sowie eines basischen Auslaugungsschritts weiter gereinigt wird.

Das bekannte Verfahren erfordert relativ viele Schritte und ist zeitaufwändig.

Die CN 1 14 212 788 A offenbart ein Verfahren zur Herstellung von gereinigtem Graphit. Bei dem bekannten Verfahren wird ein Graphit-Ausgangsmaterial zunächst mit HCl ausgelaugt. Es erfolgt anschließend eine erste Filtration zur Erzeugung eines ersten Rückstands. Der erste Rückstand wird mit Wasser gewaschen. Anschließend wird der gewaschene erste Rückstand bei einer Temperatur im Bereich von 400 °C bis 600 °C mit einer Base aufgeschlossen. Das so behandelte Gemisch wird anschließend gewaschen und einer Ultraschallbehandlung unterzogen. - Die Behandlung mit Ultraschall ruft einen verbesserten Reinigungseffekt hervor.

Die CN 1 031 512 A betrifft ein Verfahren zur Herstellung von gereinigtem Graphit. Dabei wird ein Graphit-Ausgangsmaterial zunächst bei einer Temperatur im Bereich von 180 °C bis 200 °C für 2 bis 4 Stunden mit einer 50-70%igen NaOH Lösung gerührt. Nach einem Filter- und Waschschritt wird der Filterkuchen mit 3-6%iger HCl für eine Dauer von 1 bis 2 Stunden bei einer Temperatur von 70 °C bis 90 °C gerührt.

WO 2021/232090, US 2 787 528 und AU 633 608 B2 beschreiben weitere Verfahren zur Erhaltung von gereinigtem Graphit.

Aufgabe der Erfindung ist es, die Nachteile nach dem Stand der Technik zu beseitigen. Es soll insbesondere ein alternatives Verfahren zur Herstellung von gereinigtem Graphit angegeben werden, welches mit vermindertem Aufwand durchführbar ist.

Diese Aufgabe wird durch die Merkmale des Patentanspruchs 1 gelöst. Zweckmäßige Ausgestaltungen der Erfindung ergeben sich aus den Merkmalen der abhängigen Patentansprüche.

Nach Maßgabe der Erfindung wird ein Verfahren zur Herstellung von gereinigtem Graphit mit folgenden Schritten vorgeschlagen:
Verfahren zur Herstellung von gereinigtem Graphit mit folgenden Schritten: Erstes saures Auslaugen eines Graphit-Ausgangsmaterials mit einer Säure bei einer Temperatur von höchstens 100 °C für eine erste Reaktionsdauer von 20 bis 120 Minuten, erste Filtration zur Erzeugung eines ersten Rückstands und eines ersten Filtrats, Waschen des ersten Rückstands mit destilliertem Wasser, basischer Aufschluss eines Gemischs aus einer Base und dem ersten gewaschenen Rückstand bei einer Temperatur im Bereich von 350 °C bis 550 °C für eine zweite Reaktionsdauer von 30 bis 150 Minuten, Auslaugen des Gemischs mittels Wasser für eine dritte Reaktionsdauer von 30 bis 180 Minuten, zweite Filtration zur Erzeugung eines zweiten Rückstands und eines zweiten Filtrats, Waschen des zweiten Rückstands mit destilliertem Wasser, zweites saures Auslaugen des gewaschenen zweiten Rückstands mit einer Säure bei einer Temperatur von höchstens 100 °C für eine vierte Reaktionsdauer von 30 bis 240 Minuten, dritte Filtration zur Erzeugung eines dritten Rückstands und eines dritten Filtrats und Waschen des dritten Rückstands mit destilliertem Wasser, und Waschen des dritten Rückstands mit destilliertem Wasser, wobei die Schritte des Auslaugens und des basischen Aufschlusses in der angegebenen Reihenfolge erfolgen.

Das vorgeschlagene Verfahren umfasst lediglich drei Schritte der Behandlung mit Säuren und einer Base. Damit kann bei vermindertem Aufwand eine hervorragende Reinigungsleistung von mehr als 99,95% erzielt werden.

Beim vorgeschlagenen Verfahren erfolgt der Schritt des ersten sauren Auslaugens bzw. Laugens eines Graphit-Ausgangsmaterials vorzugsweise bei einer erhöhten Temperatur im Bereich von 50° C bis 100° C, insbesondere 60° C bis 90° C. Anschließend erfolgt eine Filtration zur Erzeugung eines ersten Rückstands und eines ersten Filtrats. Der erste Rückstand wird vorzugsweise mehrfach mit destilliertem Wasser gewaschen.

Zweckmäßigerweise wird der Schritt des ersten und/oder zweiten sauren Auslaugens bei einer Temperatur im Bereich von 50° C bis 100° C durchgeführt. Es wird dabei vorzugsweise zumindest eine der folgenden Säuren verwendet: H₂SO₄, HCl, HNO₃. Die vorgenannten Säuren bzw. wässrigen Säuren können entweder alleine oder auch in Mischungen verwendet werden.

Insbesondere beim Schritt des ersten sauren Auslaugens kann als alleinige Säure HCl oder H₂SO₄ verwendet werden. Die HCl weist zweckmäßigerweise eine Konzentration im Bereich von 10% bis 30% auf. Die H₂SO₄ weist vorteilhafterweise eine Konzentration im Bereich von 90% bis 98% auf. Eine aus der HCl oder H₂SO₄ und dem Graphit-Ausgangsmaterial gebildete Suspension wird zweckmäßigerweise bei einer Temperatur von 70° C bis 90° C 0,5 bis 1,5 Stunden gerührt. Anschließend wird die Suspension der ersten Filtration zur Erzeugung des ersten Rückstands und des ersten Filtrats unterzogen. Der erste Rückstand wird zweckmäßigerweise mehrfach mit destilliertem Wasser gewaschen.

Beim Schritt des zweiten sauren Auslaugens kann als alleinige Säure H₂SO₄, vorzugsweise in einer Konzentration von 1,5% bis 10%, besonders bevorzugt in einer Konzentration von 2% bis 3%, verwendet werden. Alternativ kann die Konzentration der H₂SO₄ auch 90% bis 98%, vorzugsweise 96%, betragen. Die erste und/oder dritte Reaktionsdauer bei den Schritten des sauren Auslaugens beträgt vorzugsweise 0,5 bis 4,0 Stunden, besonders bevorzugt 1,0 bis 3,0 Stunden. Beim Schritt des ersten und/oder zweiten sauren Auslaugens gilt für das Volumen-Verhältnis von Säure S zu gewaschenem Rückstand G vorzugsweise: S/G = K1, wobei K1 eine Zahl im Bereich von 1,5 bis 3,0 ist. D. h. beim sauren Auslaugen wird das Ausgangsmaterial bzw. der zuvor erzeugte Rückstand an Graphit volumenmäßig mit einem größeren Volumen an wässriger Säure versetzt. Die Zahl K1 liegt besonders bevorzugt im Bereich von 1,8 bis 2,4.

Der Schritt des basischen Aufschlusses wird vorteilhafterweise bei einer Temperatur im Bereich von 400° C bis 500° C, vorzugsweise einer Temperatur von 420° C bis 480° C, durchgeführt. Der basische Aufschluss erfolgt bei Umgebungsdruck. Nach Ablauf der zweiten Reaktionsdauer wird das Gemisch abgekühlt, vorzugsweise auf eine Temperatur von weniger als 50° C. Hinsichtlich des Gemischs gilt für ein Volumen-Verhältnis von Base B zu erstem gewaschenen Rückstand G: B/G = K2, wobei K2 eine Zahl im Bereich von 0,5 bis 2,0 ist. D. h. das Gemisch wird zweckmäßigerweise nicht als Suspension, sondern als nasses Pulver bzw. Paste eingestellt.

Beim Schritt des basischen Aufschlusses wird als Base bzw. wässrige Base vorteilhafterweise NaOH oder KOH verwendet. Die NaOH oder KOH weist zweckmäßigerweise eine Konzentration von 35% bis 50% auf. Es hat sich gezeigt, dass insbesondere die Verwendung von NaOH in einer Konzentration von 50% bei einer Erhitzung des Gemischs auf etwa 450° C eine hervorragende Reinigungsleistung in diesem Schritt bewirkt.

Das Gemisch wird, vorzugsweise nach Abkühlung, in Wasser suspendiert. Die Suspension wird zweckmäßigerweise für die dritte Reaktionsdauer gerührt. Das Auslaugen des Gemischs mittels Wasser erfolgt zweckmäßigerweise bei Umgebungstemperatur.

Die erste und/oder zweite und/oder dritte und/oder vierte Reaktionsdauer kann 0,5 bis 3,0 Stunden, vorzugsweise 0,5 bis 2,0 Stunden, betragen.

In einer weiteren vorteilhaften Ausgestaltung wird zumindest einer der Schritte des Waschens, vorzugsweise der Schritt des Waschens des ersten Rückstands, bei einer Temperatur im Bereich von 50° C bis 85° C durchgeführt. Auch die weiteren Waschschritte können bei Temperaturen im vorgenannten Bereich durchgeführt werden.

Zweckmäßigerweise wird zumindest der zweite und/oder dritte und/oder vierte Rückstand gewaschen, bis ein entsprechendes auslaufendes Filtrat einen pH-Wert von zumindest 4 hat. Zweckmäßigerweise wird gewaschen, bis der pH-Wert zumindest 5 beträgt.

Die Schritte des Auslaugens und des basischen Aufschlusses erfolgen zweckmäßigerweise in der im Patentanspruch 1 angegebenen Reihenfolge. Zwischen diese Schritte können neben den angegebenen Wasch- und Filtrationsschritten auch andere Schritte, insbesondere zumindest ein Neutralisationsschritt, eingeschaltet sein.

Nachfolgend wird ein Ausführungsbeispiel der Erfindung anhand der Zeichnungen näher erläutert. Es zeigen:
- Fig. 1: ein erstes Flussdiagramm und
- Fig. 2: ein zweites Flussdiagramm.

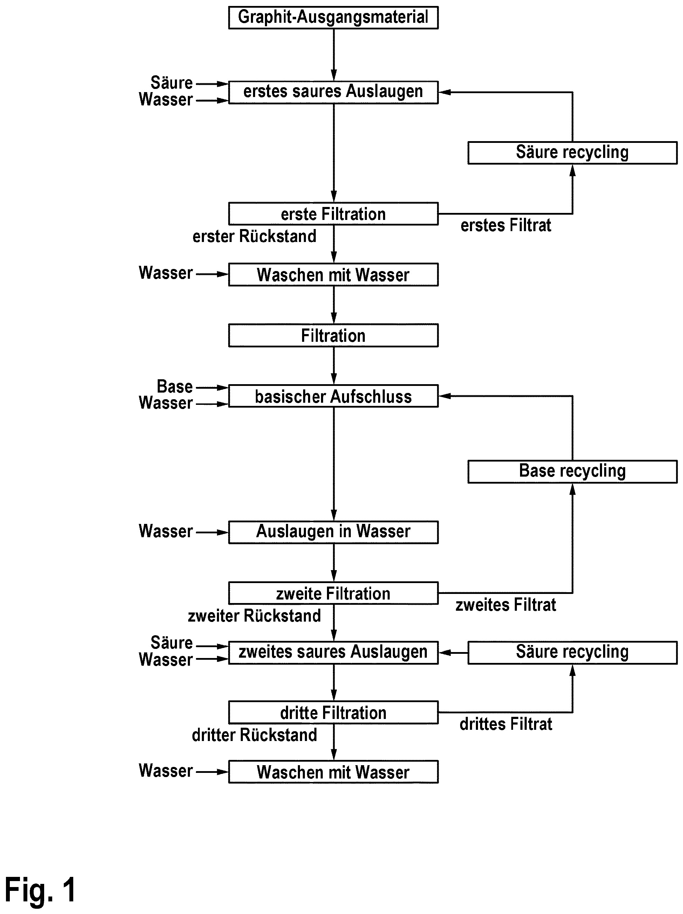

Fig. 1 zeigt in einem ersten Flussdiagramm die wesentlichen Schritte des erfindungsgemäßen Verfahrens. Als Ausgangsmaterial wird ein bereits in herkömmlicher Weise vorgereinigter Graphitrohstoff verwendet. Dieses Graphit-Ausgangsmaterial weist üblicherweise einen Graphitgehalt im Bereich von 90% bis 98% auf. Das Graphit-Ausgangsmaterial ist im Wesentlichen verunreinigt mit Mineralien, welche SiO₂, Al₂O₃ sowie Fe₂O₃ enthalten können.

Das Graphit-Ausgangsmaterial bzw. der zu reinigende Graphit wird in einer Säure, insbesondere HCl mit einer Konzentration im Bereich von 10% bis 30%, vorzugsweise 15% bis 25%, suspendiert. Die Suspension wird vorzugsweise bei einer Temperatur im Bereich von 75° C bis 85° C für etwa eine Stunde gerührt. Anschließend wird die Suspension zur Erzeugung eines ersten Rückstands und eines ersten Filtrats filtriert. Der erste Rückstand wird, vorzugsweise auf dem Filter, mit destilliertem Wasser gewaschen. Es können mehrere Waschschritte nacheinander durchgeführt werden, bis das auslaufende Filtrat einen pH-Wert vorzugsweise von zumindest 4, insbesondere 5, aufweist.

Im Anschluss daran wird aus dem ersten gewaschenen Rückstand und 50%iger NaOH ein Gemisch hergestellt. Das Gemisch wird so eingestellt, dass ein Gehalt an Feststoff mehr als 50 Vol.% beträgt. Das Gemisch wird beispielsweise in einem Muffelofen oder Drehrohrofen für eine zweite Reaktionsdauer von 1,0 bis 1,5 Stunden auf eine Temperatur von vorzugsweise 450° C erhitzt. Der basische Aufschluss erfolgt bei Luftdruck.

Nach Ablauf der zweiten Reaktionsdauer wird das Gemisch abgekühlt. Nach dem Abkühlen wird das Gemisch mit einem Überschuss an Wasser versetzt und vorzugsweise für eine dritte Reaktionsdauer von 0,5 bis 1,5 Stunden bei Umgebungstemperatur gerührt.

Der ausgelaugte zweite Rückstand wird, zweckmäßigerweise auf dem Filter, mit destilliertem Wasser gewaschen. Es können nacheinander mehrere Waschschritte durchgeführt werden. Es wird zweckmäßigerweise gewaschen, bis ein entsprechendes auslaufendes Filtrat einen pH-Wert von höchstens 10 hat.

Anschließend wird der zweite Rückstand in einer wässrigen bzw. verdünnten Säure, vorzugsweise in verdünnter H₂SO₄, suspendiert. Zur Herstellung der Suspension wird ein Teil des zweiten Rückstands mit etwa zwei Teilen an verdünnter Säure versetzt. Die Konzentration der hier vorzugsweise verwendeten H₂SO₄ beträgt 1,5% bis 3,5%. Der Schritt des zweiten sauren Auslaugens wird zweckmäßigerweise bei einer Temperatur im Bereich von 70° C bis 90° C durchgeführt. Eine vierte Reaktionsdauer beträgt vorzugsweise 1,5 bis 2,5 Stunden.

Anschließend erfolgt eine dritte Filtration zur Erzeugung eines dritten Rückstands. Der dritte Rückstand wird wiederum mit destilliertem Wasser gewaschen. Die Waschschritte können mehrfach wiederholt werden, bis ein entsprechendes auslaufendes Filtrat zweckmäßigerweise einen pH-Wert von zumindest 4, vorzugsweise mehr als 5, aufweist.

Die bei den Filtrationsschritten anfallenden Filtrate werden üblicherweise recycelt. Es ergibt sich insgesamt ein energieeffizientes Verfahren.

Wie aus den nachfolgenden Analyseergebnissen ersichtlich ist, kann mit dem erfindungsgemäßen Verfahren Graphit mit einer Reinheit von bis zu 99,99% hergestellt werden:

| | | **Graphit-Aus-gangsmaterial** | **gereinigter Graphit** |
|---|---|---|---|
| Kohlenstoff | [Gew.-%] | 96.48 | 99.99 |
| SiO₂ | [mg/kg] | 13.700 | 39 |
| Al₂O₃ | [mg/kg] | 4.160 | <10 |
| Fe₂O₃ | [mg/kg] | 6.270 | <10 |

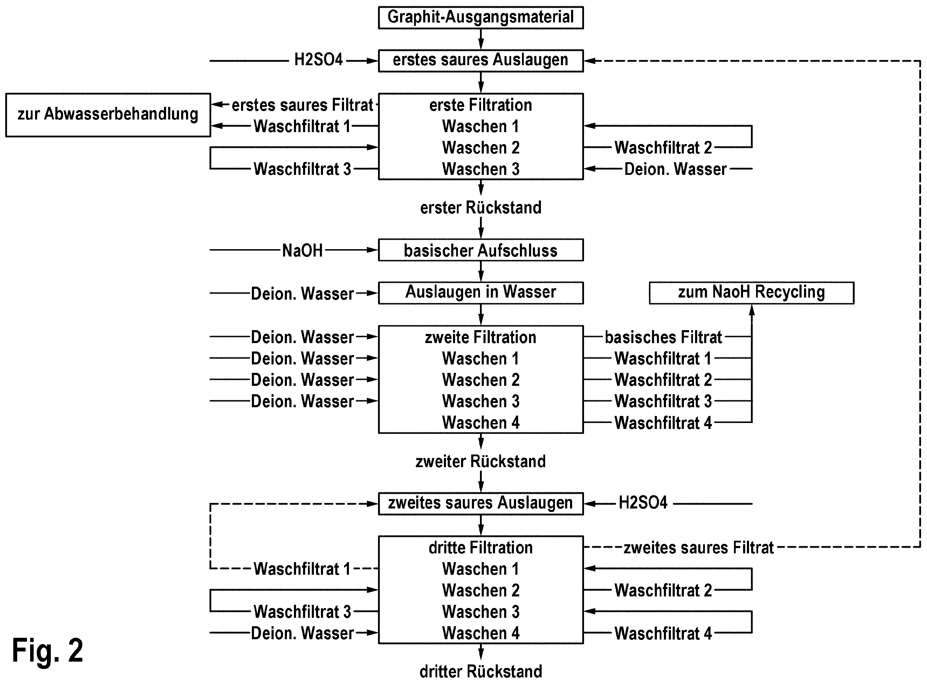

Fig. 2 zeigt in einem zweiten Flussdiagramm die wesentlichen Schritte eines weiteren erfindungsgemäßen Verfahrens. Das Graphit-Ausgangsmaterial wird in diesem Fall mit H₂SO₄ einem ersten sauren Auslaugen unterzogen. Die Behandlungszeit beträgt zweckmäßigerweise 20 bis 120 Minuten, bevorzugt 50 bis 70 Minuten, besonders bevorzugt 60 Minuten. Die Temperatur beträgt beim ersten sauren Auslaugen zweckmäßigerweise 50 °C bis 90 °C, bevorzugt 75 °C bis 85 °C. Beim vorliegenden Ausführungsbeispiel wird konzentrierte H₂SO₄ verwendet. Die Konzentration beträgt vorteilhafterweise 90% bis 98%, insbesondere 95% bis 96%.

Nach dem Schritt des ersten sauren Auslaugens erfolgt eine erste Filtration. Der Rückstand wird mehrfach gewaschen. Es ergibt sich ein erster Rückstand. Ein erstes saures Filtrat sowie ein Waschfiltrat werden einer Abwasserbehandlung zugeführt.

Der erste Rückstand wird mit 35 bis 50%iger NaOH, vorzugsweise 45-50%iger NaOH, versetzt und anschließend bei einer Temperatur im Bereich von 300 °C bis 500 °C aufgeschlossen. Eine Behandlungszeit beträgt zweckmäßigerweise 30 bis 150 Minuten, vorzugsweise 70 bis 80 Minuten.

Nach dem basischen Aufschluss wird die Mischung in Wasser ausgelaugt und anschließend einer zweiten Filtration unterzogen. Die Temperatur beim Auslaugen in Wasser beträgt vorteilhafterweise 20 °C bis 90 °C, vorzugsweise 50 °C. Eine Haltezeit beim Schritt des Auslaugens beträgt 30 bis 90 Minuten, vorzugsweise 50 bis 70 Minuten. Ein sich beim Auslaugen ergebender Rückstand wird mehrfach gewaschen, so dass sich ein zweiter Rückstand ergibt. Ein basisches Filtrat sowie die aus den Waschschritten verbleibenden Waschfiltrate werden einem NaOH Recycling zugeführt.

Der zweite Rückstand wird nun einem zweiten sauren Auslaugen unterzogen. Dabei wird als Säure wiederum konzentrierte H₂SO₄ verwendet. Die Konzentration beträgt vorteilhafterweise 90% bis 98%, insbesondere 95% bis 97%. Die Temperatur wird auf 50 °C bis 90 °C, vorzugsweise 75 °C bis 85 °C, eingestellt. Die Haltezeit beträgt zweckmäßigerweise 60 bis 240 Minuten, insbesondere 110 bis 130 Minuten.

Nach dem zweiten sauren Auslaugen erfolgt eine dritte Filtration. Ein dabei erzeugter Rückstand wird mehrfach gewaschen. Ein sich ergebendes zweiten saures Filtrat sowie die sich ergebenden Waschfiltrate werden zweckmäßigerweise zum Verfahren zurückgeführt und beim Schritt des ersten sauren Auslaugens zumindest teilweise wiederverwendet.

Es ergibt sich als dritter Rückstand ein gereinigter Graphit mit einer hervorragenden Reinheit von mehr als 99,95%.

## Patentansprüche

1. Verfahren zur Herstellung von gereinigtem Graphit mit folgenden Schritten:
Erstes saures Auslaugen eines Graphit-Ausgangsmaterials mit einer Säure bei einer Temperatur von höchstens 100° C für eine erste Reaktionsdauer von 20 bis 120 Minuten,
erste Filtration zur Erzeugung eines ersten Rückstands und eines ersten Filtrats,
Waschen des ersten Rückstands mit destilliertem Wasser,
basischer Aufschluss eines Gemischs aus einer Base und dem ersten gewaschenen Rückstand bei einer Temperatur im Bereich von 350° C bis 550° C für eine zweite Reaktionsdauer von 30 bis 150 Minuten,
Auslaugen des Gemischs mittels Wasser für eine dritte Reaktionsdauer von 30 bis 180 Minuten,
zweite Filtration zur Erzeugung eines zweiten Rückstands und eines zweiten Filtrats,
Waschen des zweiten Rückstands mit destilliertem Wasser,
zweites saures Auslaugen des gewaschenen zweiten Rückstands mit einer Säure bei einer Temperatur von höchstens 100° C für eine vierte Reaktionsdauer von 30 bis 240 Minuten,
dritte Filtration zur Erzeugung eines dritten Rückstands und eines dritten Filtrats und
Waschen des dritten Rückstands mit destilliertem Wasser,
wobei die Schritte des Auslaugens und des basischen Aufschlusses in der angegebenen Reihenfolge erfolgen.

2. Verfahren nach Anspruch 1, wobei der Schritt des ersten und/oder zweiten sauren Auslaugens bei einer Temperatur im Bereich von 50° C bis 100° C durchgeführt wird.

3. Verfahren nach einem der vorhergehenden Ansprüche, wobei beim Schritt des ersten und/oder zweiten sauren Auslaugens zumindest eine der folgenden Säuren verwendet wird: H₂SO₄, HCI, HNO₃.

4. Verfahren nach Anspruch 3, wobei beim ersten sauren Auslaugen als alleinige Säure HCl oder H₂SO₄ verwendet wird.

5. Verfahren nach Anspruch 4, wobei die HCl eine Konzentration von 10% bis 30% aufweist.

6. Verfahren nach einem der Ansprüche 3 bis 5, wobei beim zweiten sauren Auslaugen als alleinige Säure H₂SO₄ verwendet wird.

7. Verfahren nach Anspruch 6, wobei die H₂SO₄ eine Konzentration von 1,5% bis 10% oder 90% bis 98% aufweist.

8. Verfahren nach einem der vorhergehenden Ansprüche, wobei die vierte Reaktionsdauer 1,0 bis 3,0 Stunden beträgt.

9. Verfahren nach einem der vorhergehenden Ansprüche, wobei beim Schritt des ersten und/oder zweiten sauren Auslaugens für das Volumen-Verhältnis von Säure S zu gewaschenem Rückstand G gilt: S/G = K1, wobei K1 eine Zahl im Bereich von 1,5 bis 3,0 ist.

10. Verfahren nach einem der vorhergehenden Ansprüche, wobei der Schritt des basischen Aufschlusses bei einer Temperatur im Bereich von 400° C bis 500° C, vorzugsweise einer Temperatur von 420° C bis 480° C, durchgeführt wird.

11. Verfahren nach einem der vorhergehenden Ansprüche, wobei für ein Volumen-Verhältnis von Base B zu erstem gewaschenen Rückstand G gilt: B/G = K2, wobei K2 eine Zahl im Bereich von 0,5 bis 2,0 ist.

12. Verfahren nach einem der vorhergehenden Ansprüche, wobei beim Schritt des basischen Aufschlusses als Base NaOH oder KOH verwendet wird.

13. Verfahren nach Anspruch 12, wobei die NaOH oder KOH eine Konzentration von 35% bis 50% hat.

14. Verfahren nach einem der vorhergehenden Ansprüche, wobei die erste und/oder zweite und/oder dritte und/oder vierte Reaktionsdauer 0,5 bis 2,0 Stunden beträgt.

15. Verfahren nach einem der vorhergehenden Ansprüche, wobei zumindest einer der Schritte des Waschens bei einer Temperatur im Bereich 50° C bis 85° C durchgeführt wird.

16. Verfahren nach einem der vorhergehenden Ansprüche, wobei der zweite Rückstand gewaschen wird, bis ein entsprechendes auslaufendes Filtrat einen pH-Wert von höchstens 10 hat.

17. Verfahren nach einem der vorhergehenden Ansprüche, wobei zumindest der erste und/oder dritte Rückstand gewaschen wird, bis ein entsprechendes auslaufendes Filtrat einen pH-Wert von zumindest 5 hat.

## Claims

1. Method for producing purified graphite comprising the following steps:
first acid leaching of a graphite starting material with an acid at a temperature not exceeding 100 °C for a first reaction time from 20 to 120 minutes,
first filtration to produce a first residue and a first filtrate,
washing the first residue with distilled water,
basic digestion of a mixture of a base and the first washed residue at a temperature in the range from 350 °C to 550 °C for a second reaction time from 30 to 150 minutes,
leaching of the mixture with water for a third reaction time from 30 to 180 minutes,
second filtration to produce a second residue and a second filtrate,
washing the second residue with distilled water,
second acidic leaching of the washed second residue with an acid at a temperature not exceeding 100 °C for a fourth reaction time from 30 to 240 minutes,
third filtration to produce a third residue and a third filtrate and
washing the third residue with distilled water,
wherein the leaching and basic digestion steps taking place in the specified order.

2. Method according to claim 1, wherein the step of the first and/or second acid leaching is carried out at a temperature in the range from 50 °C to 100 °C.

3. Method according to any of the preceding claims, wherein at least one of the following acids is used in the step of the first and/or second acid leaching: H₂SO₄, HCI, HNO₃ .

4. Method according to claim 3, wherein HCl or H₂SO₄ is used as the sole acid in the first acid leaching.

5. Method according to claim 4, wherein the HCl has a concentration of 10% to 30%.

6. Method according to any of claims 3 to 5, wherein H₂SO₄ is used as the sole acid in the second acid leaching.

7. Method according to claim 6, wherein the H₂SO₄ has a concentration of 1.5% to 10% or 90% to 98%.

8. Method according to any of the preceding claims, wherein the fourth reaction time is 1.0 to 3.0 hours.

9. Method according to any of the preceding claims, wherein in the step of the first and/or second acid leaching the following applies for the volume ratio of acid S to washed residue G: S/G = K1, wherein K1 is a number in the range from 1.5 to 3.0.

10. Method according to any of the preceding claims, wherein the step of basic digestion is carried out at a temperature in the range from 400 °C to 500 °C, preferably a temperature from 420 °C to 480 °C.

11. Method according to any of the preceding claims, wherein the following applies for a volume ratio of base B to first washed residue G: B/G = K2, wherein K2 is a number in the range from 0.5 to 2.0.

12. Method according to any of the preceding claims, wherein NaOH or KOH is used as the base in the basic digestion step.

13. Method according to claim 12, wherein the NaOH or KOH has a concentration of 35% to 50%.

14. Method according to any of the preceding claims, wherein the first and/or second and/or third and/or fourth reaction time is 0.5 to 2.0 hours.

15. Method according to any of the preceding claims, wherein at least one of the steps of washing is carried out at a temperature in the range 50 °C to 85 °C.

16. Method according to any of the preceding claims, wherein the second residue is washed until a corresponding effluent filtrate has a pH of at most 10.

17. Method according to any of the preceding claims, wherein at least the first and/or third residue is washed until a corresponding effluent filtrate has a pH of at least 5.

## Revendications

1. Procédé de production de graphite purifié comprenant les étapes suivantes :
une première lixiviation acide d'un matériau de départ en graphite à l'aide d'un acide à une température maximale de 100 °C pendant une première durée de réaction de 20 à 120 minutes,
une première filtration afin de produire un premier résidu et un premier filtrat,
le lavage du premier résidu à l'aide d'eau distillée,
la désagrégation basique d'un mélange à partir d'une base et du premier résidu lavé à une température comprise entre 350 °C et 550 °C pendant une deuxième durée de réaction de 30 à 150 minutes,
la lixiviation du mélange avec de l'eau pendant une troisième durée de réaction de 30 à 180 minutes,
une deuxième filtration afin de produire un deuxième résidu et un deuxième filtrat,
le lavage du deuxième résidu avec de l'eau distillée,
une deuxième lixiviation acide du deuxième résidu lavé à l'aide d'un acide à une température maximale de 100 °C pendant une quatrième durée de réaction de 30 à 240 minutes,
une troisième filtration afin de produire un troisième résidu et un troisième filtrat et
le lavage du troisième résidu avec de l'eau distillée,
en ce que les étapes de lixiviation et de désagrégation basique sont effectuées dans l'ordre indiqué.

2. Procédé selon la revendication 1, en ce que l'étape de la première et/ou de la deuxième lixiviation acide est effectuée à une température comprise entre 50 °C et 100 °C.

3. Procédé selon l'une des revendications précédentes, en ce qu'au moins l'un des acides suivants : H₂SO₄, HCI, HNO₃ est utilisé à l'étape de la première et/ou de la deuxième lixiviation acide.

4. Procédé selon la revendication 3, en ce que seul l'acide HCl ou H₂SO₄ est utilisé lors de la première lixiviation acide.

5. Procédé selon la revendication 4, en ce que le HCl présente une concentration comprise entre 10 % et 30 %.

6. Procédé selon l'une des revendications 3 à 5, en ce que seul l'acide H₂SO₄ est utilisé lors de la deuxième lixiviation acide.

7. Procédé selon la revendication 6, en ce que le H₂SO₄ présente une concentration comprise entre 1,5 % et 10 % ou 90 % et 98 %.

8. Procédé selon l'une des revendications précédentes, en ce que la quatrième durée de réaction est de 1,0 à 3,0 heures.

9. Procédé selon l'une des revendications précédentes, en ce que, à l'étape de la première et/ou de la deuxième lixiviation acide, le rapport volumique entre l'acide S et le résidu lavé G est le suivant : S/G = K1, K1 étant un nombre compris entre 1,5 et 3,0.

10. Procédé selon l'une des revendications précédentes, en ce que l'étape de la désagrégation basique est effectuée à une température comprise entre 400 °C et 500 °C, de préférence à une température comprise entre 420 °C et 480 °C.

11. Procédé selon l'une des revendications précédentes, en ce qu'un rapport volumique entre la base B et le premier résidu lavé G est le suivant : B/G = K2, K2 étant un nombre compris entre 0,5 et 2,0.

12. Procédé selon l'une des revendications précédentes, en ce que le NaOH ou le KOH est utilisé comme base à l'étape de la désagrégation basique.

13. Procédé selon la revendication 12, en ce que le NaOH ou le KOH a une concentration comprise entre 35 % et 50 %.

14. Procédé selon l'une des revendications précédentes, en ce que la première et/ou la deuxième et/ou la troisième et/ou la quatrième durée de réaction est de 0,5 à 2,0 heures.

15. Procédé selon l'une des revendications précédentes, en ce qu'au moins l'une des étapes de lavage est effectuée à une température comprise entre 50 °C et 85 °C.

16. Procédé selon l'une des revendications précédentes, en ce que le deuxième résidu est lavé jusqu'à ce qu'un filtrat s'écoulant correspondant ait un pH maximal de 10.

17. Procédé selon l'une des revendications précédentes, en ce qu'au moins le premier et/ou le troisième résidu est lavé jusqu'à ce qu'un filtrat s'écoulant correspondant ait un pH d'au moins 5.
